# EUROPÄISCHE PATENTSCHRIFT

(11) **EP 3 894 884 B1**
(45) Veröffentlichungstag und Bekanntmachung des Hinweises auf die Patenterteilung: **04.09.2024**
(21) Anmeldenummer: 19816653.0
(22) Anmeldetag: 05.12.2019
(51) Int. Cl.: G01S 7/481, G01S 17/89

(54) **LIDAR-SYSTEM SOWIE KRAFTFAHRZEUG**
LIDAR SYSTEM AND MOTOR VEHICLE
SYSTÈME LIDAR ET VÉHICULE À MOTEUR

(30) Priorität: 12.12.2018 DE 102018221530
(43) Veröffentlichungstag der Anmeldung: 20.10.2021
(73) Patentinhaber: Robert Bosch GmbH, 70442 Stuttgart (DE)
(72) Erfinder: HOLLECZEK, Annemarie, 71638 Ludwigsburg (DE); KAMIL, Mustafa, 71229 Leonberg (DE)
(86) Internationale Anmeldenummer: PCT/EP2019/083810
(87) Internationale Veröffentlichungsnummer: WO 2020/120278

(56) Entgegenhaltungen:
- DE-A1- 102016 102 610
- US-A1- 2005 128 509
- US-A1- 2010 302 528

## Beschreibung

Die vorliegende Erfindung betrifft ein LiDAR-System, das dafür eingerichtet ist, eine Umwelt mit einem Lichtstrahl abzutasten, um Tiefeninformationen über die Umwelt zu erfassen.

Die vorliegende Erfindung betrifft weiter ein Kraftfahrzeug mit einem solchen LiDAR-System, wobei das LiDAR-System mit dem Kraftfahrzeug wirkverbunden ist.

### Stand der Technik

Solche LiDAR-Systeme und Kraftfahrzeuge sind grundsätzlich bekannt. Sie weisen beispielsweise eine Lawinenphotodiode als einen Photodetektor auf, beispielsweise eine Einzelphotonen-Lawinenphotodiode (engl. single-photon avalanche diode, SPAD), oder stattdessen einen Silizium-Photomultiplier (SiPM) als Photodetektor. Das LiDAR-System kann eine Laserquelle aufweisen, um den Lichtstrahl auszusenden. Der Photodetektor ist dafür angeordnet, den von der Umwelt reflektierten Lichtstrahl zu empfangen. Aus Empfangssignalen des Photodetektors kann dann eine Auswerteelektronik die Tiefeninformationen erhalten.

Aus der US 2017 176579 A ist beispielsweise ein LiDAR-System ("electro-optical device") bekannt, bestehend aus einer Laserquelle, einer Strahlablenkung, einem Photodetektor, Optiken sowie entsprechender Elektronik. Diese Offenlegungsschrift offenbart ein System, das Detektorpixel sukzessive aktiviert um das Signal-zu-Rausch-Verhältnis eines Sensors zu erhöhen. Dem Fachmann ist aus dieser Lehre ersichtlich, dass es sich hierbei um eine µ-Spiegel-basierte Implementierung des LiDAR-Systems handelt. Allerdings sind die Detektoreinheiten temporär parallel aktiv, da das LiDAR-System kein scannendes, sondern ein gleichmäßiges Ausleuchtungsmuster ("Flash") bereitstellt.

In der US 2018 003821 A wird ein LiDAR-System ("object detector") offenbart, bestehend aus mehreren Lichtquellen, einem Photodetektor, Optiken sowie entsprechender Elektronik. Die Lichtquellen sind einzeln und nacheinander ansteuerbare Laserdioden. Die US 2018 003821 A offenbart, dass jeder Lichtquelle genau ein Empfangselement zugeordnet ist. Die Pixel werden einzeln und gleichzeitig / parallel ausgelesen. Der Detektortyp kann als eine SPAD ausgeführt werden und dies ist in der Beschreibung als eine mögliche Ausführung genannt, aber in Abbildungen sieht ein Fachmann ein LiDAR-System mit Lawinenphotodioden (engl. avalanche photo diode, APD).

Weiter sind grundsätzlich SPAD-Sensoriken mit Rot-, Grün- und Blau- (RGB-) Farbkanälen und mit separaten Photodetektoren bekannt.

US 2016 240579 A1 offenbart eine "farbensehende" Vorrichtung, bei der RGB-Pixel mit SPAD-Pixeln zu einer Einheit verbunden sind. Allerdings wird RGB-Pixel und SPAD-Pixel jeweils einzeln und separat ausgelesen und die Daten erst im Nachgang im Rahmen der Signalverarbeitung kombiniert.

Die Veröffentlichungsnummer DE 697 33 014 T2 wird als allgemeiner Stand der Technik betrachtet und offenbart ein System, das einen LiDAR-Scanner einsetzt. Eine zusätzliche Schmalwinkel-CCD-Kamera erfasst Textur- und Farbdaten. Ein Standard-RGB-Bild einer Szene kann angezeigt werden und ein RGB-Export ist möglich.

Die Veröffentlichungsnummer DE 10 2016 211 013 A1 wird als allgemeiner Stand der Technik betrachtet und offenbart eine LiDAR-Vorrichtung, bei der eine Detektionseinrichtung der LiDAR-Vorrichtung einen Farbfilter und/oder Bandpassfilter aufweist. Als Detektionsoberflächen sind SPAD-Photodioden vorgesehen.

Die Veröffentlichungsnummer DE 10 2006 010 295 A1 offenbart ein Kamerasystem mit zumindest zwei verschiedenartigen Bildaufnehmern und wird ebenfalls als allgemeiner Stand der Technik betrachtet. Ein CMOS-Bildaufnehmer ist beispielsweise mit einem SPAD-Bildaufnehmer kombiniert. Durch redundante Aufnahmen eines Objekts (zum Beispiel Form, Größe, Farbe, etc.) wird eine Zuverlässigkeit eines 3D-Bildes erhöht, das aus den Aufnehmerdaten zusammengefügt wird.

Die US 2010/0302528 A1 offenbart ein LiDAR-System nach dem Oberbegriff von Anspruch 1. Das im genannten Dokument offenbarte LiDAR-System sieht Avalanche-Photodetektordioden vor, die Farblichtintensität detektieren, die von einem Ziel zurückgegeben wird.

Die DE 10 2016 102 610 A1 offenbart einen Laserscanner, der mehrere Avalanche-Fotodioden aufweist, die durch jeweilige Bandpassfilter separierte optische Wellenlängen in elektrische Signale umwandeln.

Die US 2005/0128509 A1 offenbart eine Digitalbildvorrichtung, in welcher eine Farbfiltermatrix, insbesondere eine Bayermatrix, vor einen Bildsensor positioniert wird, um eine verbesserte Bildqualität zu erhalten.

### Offenbarung der Erfindung

Erfindungsgemäß wird ein LiDAR-System gemäß Anspruch 1 zur Verfügung gestellt.

### Vorteile der Erfindung

Das erfindungsgemäße LiDAR-System hat den Vorteil, dass das LiDAR-System um die Erfassung von Farbinformationen über die Umwelt erweitert ist. Das LiDAR-System stellt somit gleichzeitig sowohl eine herkömmliche LiDAR-Abtastfunktion, zur Erfassung von Tiefeninformationen, als auch eine passive Farbbildkamera, zur Erfassung von Farbinformationen, bereit. Die mehrheitlichen Farbeigenschaften von Objekten können ermittelt sowie vorzugsweise zeitsynchron mit ihrer Entfernung in Relation gesetzt werden. Eine passive Farbbildkamera kann in einem einzigen Gerät mit einem LiDAR-Betrieb kombiniert sein.

Das LiDAR-System ist dafür eingerichtet, aus Empfangssignalen von einem oder mehreren Photodetektoren ein Farbsignal zu bilden, um die Farbinformationen über die Umwelt zu erfassen. Vorzugsweise sind der eine oder die mehreren Photodetektoren zusätzlich dafür eingerichtet, die Tiefeninformationen zu erfassen. Photodetektoren sind in LiDAR-Systemen oft ohnehin zur Erfassung der Tiefeninformationen vorhanden und können so eine zusätzliche Funktion übernehmen. Der doppelte Nutzen der Photodetektoren erlaubt beispielsweise eine optimale zeitliche Synchronisation von Farb- und Tiefeninformationen. Entsprechend ist das LiDAR-System vorzugsweise dafür eingerichtet, die Farb- und Tiefeninformationen synchronisiert zu erfassen und vorzugsweise auch synchronisiert auszugeben, vorzugsweise durch die Auswerteelektronik. Auch wird so vorzugsweise die Kombination von Tiefen- und Farbenerfassung in einem einzigen optischen Pfad ermöglicht, was Vorteile zum Beispiel bei der Baugröße mit sich bringen kann. Das LiDAR-System ist besonders vorzugsweise dafür eingerichtet, aus Empfangssignalen von mehreren Photodetektoren ein zusammengesetztes Farbsignal zu bilden, um die Farbinformationen über die Umwelt zu erfassen. Hierzu kann eine entsprechend eingerichtete Auswerteelektronik im LiDAR-System vorgesehen sein. Das zusammengesetzte Farbsignal ist vorzugsweise das RGB-Signal, besonders vorzugsweise ein RGBIR-Signal, das neben Rot, Grün und Blau auch noch Infrarotdaten (IR) einschließt. Da somit bereits das LiDAR-System dafür eingerichtet ist, das zusammengesetzte Farbsignal zu bilden, kann auf eine anschließende Zusammensetzung von Empfangssignalen zur Bildung des zusammengesetzten Farbsignals im Rahmen einer zeitlich nachgelagerten Auswertung verzichtet werden. Für die Detektion von Objekteigenschaften in der Umwelt werden von dem LiDAR-System durch die RGB-Signale drei zusätzliche Parameter erfasst. Damit können beispielsweise Machine-Learning-Algorithmen verbessert werden. Bevorzugte Photodetektoren sind Halbleiterdetektoren, insbesondere hergestellt aus Silizium, Galliumarsenid oder Indiumphosphid. Die Verwendung der Photodetektoren, um das Farbsignal zu bilden, kann außerdem den Vorteil haben, dass Belichtungszeiten von der Größenordnung Millisekunden, die gängige übliche Farbkameras für Farbpixel erfordern, auf die Größenordnung Nanosekunden verringert werden können.

Das LiDAR-System weist eine erste Photodetektoranordnung und eine zweite Photodetektoranordnung aufweist. Die erste Photodetektoranordnung ist dafür eingerichtet ist, einen ersten Lichtwellenlängenbereich zu empfangen. Der erste Lichtwellenlängenbereich ist vorzugsweise der Lichtwellenlängenbereich von Rotlicht. Daher liegt der erste Lichtwellenlängenbereich insbesondere zwischen 585 nm und 780 nm. Der erste Lichtwellenlängenbereich kann allerdings nach oben oder unten leicht abweichen oder auch auf einen vorbestimmten Wert innerhalb des genannten Intervalls festgelegt sein, wie beispielsweise auf genau 650 nm. So kann die Selektivität der ersten Photodetektoranordnung je nach Anwendung erhöht oder verringert werden. Die zweite Photodetektoranordnung ist dafür eingerichtet, einen zweiten Lichtwellenlängenbereich zu empfangen. Der zweite Lichtwellenlängenbereich ist vorzugsweise der Lichtwellenlängenbereich von Grünlicht. Daher liegt der erste Lichtwellenlängenbereich insbesondere zwischen 497 nm und 585 nm. Der zweite Lichtwellenlängenbereich kann allerdings nach oben oder unten leicht abweichen oder auch auf einen vorbestimmten Wert innerhalb des genannten Intervalls festgelegt sein, wie beispielsweise auf genau 510 nm. So kann die Selektivität der zweiten Photodetektoranordnung je nach Anwendung erhöht oder verringert werden. Der erste Lichtwellenlängenbereich ist von dem zweiten Lichtwellenlängenbereich mindestens teilweise verschieden. In manchen Ausführungsformen ist vorgesehen, dass sich der erste Lichtwellenlängenbereich und der zweite Lichtwellenlängenbereich überlappen. In anderen Ausführungsformen ist vorgesehen, dass der erste Lichtwellenlängenbereich und der zweite Lichtwellenlängenbereich separiert sind. So erlaubt das LiDAR-System, zwei Lichtwellenlängenbereiche als unterschiedliche Farbinformationen über die Umwelt zu erfassen. Mit anderen Worten stellt das LiDAR-System in dieser Ausführungsform somit gleichzeitig sowohl eine herkömmliche LiDAR-Abtastfunktion, zur Erfassung von Tiefeninformationen, als auch eine zweifarbige passive Farbbildkamera, zur Erfassung von Farbinformationen, bereit, nämlich für den ersten Lichtwellenlängenbereich und für den zweiten Lichtwellenlängenbereich. Dies kann zu sinkenden Kosten, sinkender Baugröße und einem Entfallen von Justage- und Kalibrierungsaufwand führen.

In einigen Ausführungsformen weist das LiDAR-System eine dritte Photodetektoranordnung auf. Bevorzugt ist, dass die dritte Photodetektoranordnung dafür eingerichtet ist, einen dritten Lichtwellenlängenbereich zu empfangen. Der dritte Lichtwellenlängenbereich ist vorzugsweise der Lichtwellenlängenbereich von Blaulicht. Daher liegt der dritte Lichtwellenlängenbereich insbesondere zwischen 380 nm und 497 nm. Der dritte Lichtwellenlängenbereich kann allerdings nach oben oder unten leicht abweichen oder auch auf einen vorbestimmten Wert innerhalb des genannten Intervalls festgelegt sein, wie beispielsweise auf genau 490 nm. So kann die Selektivität der dritten Photodetektoranordnung je nach Anwendung erhöht oder verringert werden. In manchen Ausführungsformen ist der dritte Lichtwellenlängenbereich von dem ersten Lichtwellenlängenbereich mindestens teilweise verschieden. In einigen Ausführungsformen ist der dritte Lichtwellenlängenbereich von dem zweiten Lichtwellenlängenbereich mindestens teilweise verschieden. Manche Ausführungsformen sehen jedoch vor, dass der dritte Lichtwellenlängenbereich und der zweite Lichtwellenlängenbereich überlappen. Sind drei Lichtwellenlängenbereiche zur Erfassung vorgesehen, kann auf einfache Weise ein dreifarbiges Farbsignal, insbesondere das RGB-Signal, durch das LiDAR-System bereitgestellt werden. Das dreifarbige Farbsignal kann in Ausführungsformen über drei separate Farbkanäle durch das LiDAR-System bereitgestellt werden, von denen jeder eines der drei Farbsignale bereitstellt.

Das LiDAR-System weist in einigen Ausführungsformen eine vierte Photodetektoranordnung auf. Die vierte Photodetektoranordnung ist vorzugsweise dafür eingerichtet, einen vierten Lichtwellenlängenbereich zu empfangen. Der vierte Lichtwellenlängenbereich ist vorzugsweise der Lichtwellenlängenbereich von IR-Licht. Daher liegt der vierte Lichtwellenlängenbereich insbesondere zwischen 700 nm und 1 mm. Der vierte Lichtwellenlängenbereich kann allerdings nach oben oder unten abweichen oder auch auf einen vorbestimmten Wert innerhalb des genannten Intervalls festgelegt sein, wie beispielsweise auf genau 780 nm. So kann die Selektivität der vierten Photodetektoranordnung je nach Anwendung erhöht oder verringert werden. In manchen Ausführungsformen liegt der vierte Lichtwellenlängenbereich im Bereich von nahem Infrarot (NIR) und/oder mittlerem Infrarot (MIR) und/oder fernem Infrarot (FIR). Bevorzugt ist, dass der vierte Lichtwellenlängenbereich von dem ersten Lichtwellenlängenbereich mindestens teilweise verschieden ist.

Weiter ist bevorzugt, dass der vierte Lichtwellenlängenbereich von dem zweiten Lichtwellenlängenbereich mindestens teilweise verschieden ist. Ebenfalls ist bevorzugt, dass der vierte Lichtwellenlängenbereich von dem dritten Lichtwellenlängenbereich mindestens teilweise verschieden ist. In manchen Ausführungsformen überlappen der erste Lichtwellenlängenbereich und der vierte Lichtwellenlängenbereich. In einigen Ausführungsformen sind jedoch der erste Lichtwellenlängenbereich und der vierte Lichtwellenlängenbereich voneinander separiert. Sieht das LiDAR-System die vier Photodetektoranordnungen vor, so kann auf einfache Weise ein vierfarbiges Farbsignal, insbesondere das RGBIR-Signal, durch das LiDAR-System bereitgestellt werden. Die vier Farbsignale können über vier separate Farbkanäle durch das LiDAR-System bereitgestellt werden, von denen jeder eines der vier Farbsignale bereitstellt.

Vorzugsweise stellt die erste Photodetektoranordnung das Rotsignal bereit. Vorzugsweise stellt die zweite Photodetektoranordnung das Grünsignal bereit. Vorzugsweise stellt die dritte Photodetektoranordnung das Blausignal bereit. Vorzugsweise stellt die vierte Photodetektoranordnung das IR-Signal bereit.

Allerdings kann die erste Photodetektoranordnung in manchen Ausführungsformen sowohl das Rotsignal als auch das IR-Signal in Kombination bereitstellen. Der erste Lichtwellenlängenbereich liegt dann insbesondere zwischen 585 nm bis zu 1 mm. So können Rotsignal, Grünsignal, Blausignal und IR-Signal mit nur drei Photodetektoranordnungen bereitgestellt werden, vorzugsweise über nur drei Farbkanäle.

In manchen Ausführungsformen sind zwei oder mehr der Photodetektoranordnungen in einer gemeinsamen Detektormatrix angeordnet. Bevorzugt ist, dass zwei oder mehr der Photodetektoranordnungen ein gemeinsames Detektorbauteil bilden. Dies hat den Vorteil, dass der Justierungs- und Konfigurationsaufwand sinken kann, weil vor Inbetriebnahme nicht länger einzelne Photodetektoranordnungen in Abhängigkeit voneinander konfiguriert werden müssen, sondern zwei der mehr Photodetektoranordnungen als vorkonfiguriertes gemeinsames Bauteil bereitgestellt werden können. Besonders bevorzugt ist, dass alle Photodetektoranordnungen in der gemeinsamen Detektormatrix angeordnet sind und ein gemeinsames Detektorbauteil bilden. Vorzugsweise weist die Detektormatrix Zeilen und Spalten auf, wobei vorzugsweise die Anzahl der Zeilen gleich der Anzahl der Spalten ist. Vorzugsweise sind drei oder mehr Zeilen und/oder drei oder mehr Spalten vorhanden, besonders vorzugsweise vier oder mehr Zeilen und/oder vier oder mehr Spalten, ganz besonders vorzugsweise mehr als fünf oder mehr Zeilen und/oder fünf oder mehr Spalten.

Jeder der Photodetektoren ist genau einer der Photodetektoranordnungen zugeordnet-ist. Bevorzugt ist zudem, dass in der Detektormatrix zueinander in einer Zeile und/oder Spalte benachbarte Photodetektoren zu unterschiedlichen Photodetektoranordnungen zugeordnet sind. Vorzugsweise sind in jeder Zeile der Detektormatrix mehrere, besonders vorzugsweise genau zwei, der Photodetektoranordnungen miteinander abwechselnd verschränkt. Jedem der Photodetektoren ist ein Lichtwellenlängenfilter vorgelagert, das für den Lichtwellenlängenbereich durchlässig ist, der durch die jeweilige Photodetektoranordnung empfangen werden soll. Das Lichtwellenlängenfilter, das den Photodetektoren der ersten Photodetektoranordnung jeweils vorgelagert ist, ist vorzugsweise für den ersten Lichtwellenlängenbereich durchlässig. Das Lichtwellenlängenfilter, das den Photodetektoren der zweiten Photodetektoranordnung jeweils vorgelagert ist, ist vorzugsweise für den zweiten Lichtwellenlängenbereich durchlässig. Das Lichtwellenlängenfilter, das den Photodetektoren der dritten Photodetektoranordnung jeweils vorgelagert ist, ist vorzugsweise für den dritten Lichtwellenlängenbereich durchlässig. Das Lichtwellenlängenfilter, das den Photodetektoren der vierten Photodetektoranordnung jeweils vorgelagert ist, ist vorzugsweise für den vierten Lichtwellenlängenbereich durchlässig. Anders ausgedrückt, wird die Zuordnung der Photodetektoren zu den jeweiligen Photodetektoranordnungen durch das jeweils vorgelagerte Lichtwellenlängenfilter bestimmt. Die Anzahl unterschiedlicher Lichtwellenlängenfilter bestimmt die Anzahl der Photodetektoranordnungen. Ist also beispielsweise eine Vielzahl von Lichtwellenlängenfiltern vorgesehen, die insgesamt für drei unterschiedliche Lichtwellenlängen durchlässig sind, so sind dadurch drei Photodetektoranordnungen definiert. Der Vorteil davon kann sein, dass die Photodetektoren selbst alle identisch, insbesondere hinsichtlich der von ihnen empfangbaren Lichtwellenlänge, ausgeführt sein können und nur das jeweils vorgelagerte Lichtwellenlängenfilter bestimmt, welcher Lichtwellenlängenbereich durch den dahinterliegenden Photodetektor erfasst wird. Alternativ können aber die Photodetektoren selbst wellenlängenselektiv eingerichtet sein, sodass auf die in Detektionsrichtung vorgelagerten Lichtwellenlängenfilter verzichtet werden kann. Dann bilden alle die Photodetektoren, die dieselbe Wellenlängenselektivität aufweisen, eine jeweilige Photodetektoranordnung, die durch ihre jeweilige Wellenlängenselektivität definiert ist.

Mehrere der Lichtwellenlängenfilter sind in einer gemeinsamen Filtermatrix angeordnet und bilden ein gemeinsames Filterbauteil Die Filtermatrix ist vorzugsweise, mit anderen Worten, im optischen Empfangspfad einem SPAD-basierten Detektor in SiPM-Konfiguration (SPAD-Array) vorgesetzt. Die Gestaltung der Filtermatrix entspricht einer Gestaltung der Detektormatrix, sodass jeweils einer der Lichtwellenlängenfilter einem der Photodetektoren vorgelagert ist. Dies hat den Vorteil, dass der Justierungs- und Konfigurationsaufwand sinkt weil vor Inbetriebnahme nicht länger einzelne Lichtwellenlängenfilter in Abhängigkeit voneinander konfiguriert werden müssen, sondern zwei der mehr Lichtwellenlängenfilter als vorkonfiguriertes gemeinsames Bauteil bereitgestellt werden können. Besonders bevorzugt ist, dass alle Lichtwellenlängenfilter in der gemeinsamen Filtermatrix angeordnet sind und ein gemeinsames Filterbauteil bilden. Vorzugsweise weist die Filtermatrix Zeilen und Spalten auf, wobei vorzugsweise die Anzahl der Zeilen gleich der Anzahl der Spalten ist. Vorzugsweise sind drei oder mehr Zeilen und/oder drei oder mehr Spalten vorhanden, besonders vorzugsweise vier oder mehr Zeilen und/oder vier oder mehr Spalten, ganz besonders vorzugsweise mehr als fünf oder mehr Zeilen und/oder fünf oder mehr Spalten. Vorzugsweise entspricht die Anzahl der Zeilen und Spalten der Filtermatrix der Anzahl der Zeilen und Spalten der Detektormatrix. So kann besonders einfach eine exakte Bedeckung der Photodioden mit den jeweiligen Lichtwellenlängenfiltern erfolgen, um die verschiedenen Photodetektoranordnungen zu definieren. Entsprechend ist eine bevorzugte Filtermatrix ein RGBIR-Farbfeldarray oder ein modifizierter Bayerfilter. Die Lichtwellenlängenfilter können vorzugsweise aus organischen Farbstoffen oder beschichteten Bragg-Filter-Strukturen hergestellt sein. Somit erlaubt die Erfindung also die Verwendung kostengünstiger, schmalbandiger optischer Wellenlängenfilter-Arrays.

Mindestens einer der Photodetektoren ist vorzugsweise eine Einzelphotonen-Lawinenphotodiode. Derartige Einzelphotonen-Lawinenphotodioden sind dafür eingerichtet, einzelne Photonen unabhängig von ihrer Lichtwellenlänge zu zählen. Das vereinfacht die Konstruktion des LiDAR-Systems, denn aufgrund der den Photodetektoren vorzugsweise vorgelagerten Lichtwellenlängenfilter müssen die Photodetektoren nicht selbst die Lichtwellenlänge filtern, sondern müssen nur noch die bereits gefilterten Photonen zählen. Dies erlaubt die Verwendung von einer Vielzahl identischer Photodetektoren und somit eine kostengünstige Lösung. Deshalb ist besonders bevorzugt, dass alle der Photodetektoren Einzelphotonen-Lawinenphotodioden sind. Mit anderen Worten ausgedrückt, können die einzelnen SPAD nur Photonen zählen. Da aber die einzelnen Lichtwellenlängenfilter der Filtermatrix nur Photonen der richtigen Frequenz beziehungsweise Wellenlänge transmittieren, zählen einzelne, dahinterliegende SPAD genau diese Photonen, die anschließend den Farben beziehungsweise dem IR-Kanal zugeordnet werden können. Bevorzugt ist, dass aus dem Empfangssignal der Einzelphotonen-Lawinenphotodiode sowohl die Tiefeninformationen als auch die Farbinformationen erhalten werden. So kann die Einzelphotonen-Lawinenphotodiode eine doppelte Funktion übernehmen, bei vorzugsweise deutlicher Reduktion von Belichtungszeiten gegenüber gängigen Farbkameras.

Das Detektorbauteil und das Filterbauteil bilden ein gemeinsames Bauelement. Das Filterbauteil und das Detektorbauteil können beispielsweise hoch integriert in einem zusammenhängenden Reinraumprozess gefertigt und zu dem gemeinsamen Bauelement zusammengesetzt werden. Damit kann ein späterer Justageaufwand entfallen. Das Detektorbauteil und das Filterbauteil sind miteinander stoffschlüssig verbunden, insbesondere verklebt, um das gemeinsame Bauelement zu bilden. Dies kann eine einfache, kostengünstige und effiziente Möglichkeit sein, das gemeinsame Bauelement zu fertigen. In Ausführungsformen sind die Photodetektoren jeweils einzeln in einem Innenraum, der zwischen Filterbauteil und Detektorbauteil gebildet ist, verkapselt. So kann jeder Photodetektor auf dem Detektorbauteil separat gut geschützt sein. In manchen Ausführungsformen ist jedoch vorgesehen, dass mehrere Photodetektoren in einem gemeinsamen Innenraum verkapselt sind.

In einigen Ausführungsformen umfassen eine oder mehrere der Photodetektoranordnungen genau einen Photodetektor. In manchen Ausführungsformen umfassen eine oder mehrere der Photodetektoranordnungen zwei oder mehr Photodetektoren. Vorzugsweise ist die Anzahl an Photodetektoren für zwei oder mehr oder alle Photodetektoranordnungen gleich. In einigen Ausführungsformen ist jedoch die Anzahl von Photodetektoren in derjenigen Photodetektoranordnung, die das IR-Signal bereitstellt, kleiner oder größer als in den übrigen Photodetektoranordnungen, wobei vorzugsweise die Anzahl der Photodetektoren in den übrigen Photodetektoranordnungen gleich ist.

Erfindungsgemäß wird zudem das Kraftfahrzeug der eingangs genannten Art zur Verfügung gestellt, wobei eine Ausführungsform des voranstehend beschriebenen LiDAR-Systems mit dem Kraftfahrzeug wirkverbunden ist.

Das erfindungsgemäße Kraftfahrzeug hat den Vorteil, dass es durch das LiDAR-System um die Erfassung von Farbinformationen über die Umwelt erweitert ist. Das LiDAR-System stellt somit gleichzeitig sowohl eine herkömmliche LiDAR-Abtastfunktion, zur Erfassung von Tiefeninformationen, als auch eine passive Farbbildkamera, zur Erfassung von Farbinformationen, an dem Kraftfahrzeug bereit. Die mehrheitlichen Farbeigenschaften von Objekten können ermittelt sowie vorzugsweise zeitsynchron mit ihrer Entfernung in Relation gesetzt werden. Eine passive Farbbildkamera kann in einem einzigen Gerät mit einem LiDAR-Betrieb kombiniert sein.

Bevorzugte Kraftfahrzeuge sind Personenkraftwagen, Lastkraftwagen, Zweiräder, insbesondere Motorräder, und Busse. Das LiDAR-System kann in dem Kraftfahrzeug über eine geeignete Schnittstelle mit Steuereinheiten für zumindest teilweise automatisierte Fahrfunktionen wirkverbunden sein, insbesondere für Mono-Video-Partly-Automated-Driving. Das Kraftfahrzeug kann zudem 3D-Kameras aufweisen.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 ein LiDAR-System gemäß einer ersten Ausführungsform der Erfindung mit einer gemeinsamen Detektormatrix und einer gemeinsamen Filtermatrix, die der Detektormatrix vorgelagert ist;
Figur 2 eine schematische Draufsicht auf ein gemeinsames Detektorbauteil des LiDAR-Systems gemäß der ersten Ausführungsform der Erfindung;
Figur 3 eine seitliche Querschnittsansicht durch die Detektormatrix und die Filtermatrix gemäß Figur 1; und
Figur 4 eine Draufsicht auf eine alternative Filtermatrix gemäß einer zweiten Ausführungsform der Erfindung.

### Ausführungsformen der Erfindung

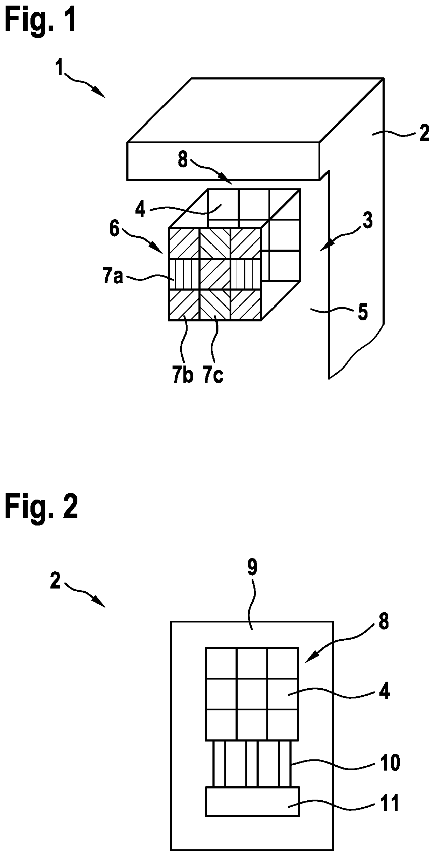

In der Figur 1 ist ein LiDAR-System 1 in einer ersten Ausführungsform gemäß der Erfindung gezeigt. Das LiDAR-System 1 ist in einem Kraftfahrzeug (nicht gezeigt) angeordnet und mit dem Kraftfahrzeug wirkverbunden. Verschiedene dem Fachmann bekannte Details des LiDAR-Systems 1 sind zur Vereinfachung weggelassen worden, wie beispielsweise eine Laserquelle, die dazu dient, einen Lichtstrahl auszusenden, um eine Umwelt abzutasten.

Das in Figur 1 gezeigte LiDAR-System 1 ist dafür eingerichtet, die Umwelt mit dem Lichtstrahl abzutasten, um Tiefeninformationen über die Umwelt zu erfassen, und ist zusätzlich dafür eingerichtet, Farbinformationen über die Umwelt zu erfassen, wie im Folgenden detailliert erläutert werden wird.

Das LiDAR-System 1 umfasst ein Detektorbauteil 2 und ein Filterbauteil 3. Das Detektorbauteil 2 umfasst eine Vielzahl von Photodetektoren 4, hier beispielhaft neun identische Photodetektoren 4. Das LiDAR-System 1 ist dafür eingerichtet mittels der Photodetektoren 4 die Farbinformationen über die Umwelt zu erfassen.

Das LiDAR-System 1 ist genauer gesagt dafür eingerichtet, aus Empfangssignalen der Vielzahl von Photodetektoren 4 ein Farbsignal zu bilden, um die Farbinformationen über die Umwelt zu erfassen.

Die einzelnen Photodetektoren 4 sind im gezeigten ersten Ausführungsbeispiel in drei Photodetektoranordnungen gruppiert, die durch das Filterbauteil 3 definiert sind, das dem Detektorbauteil 2 in Detektionsrichtung der Photodetektoren 3 vorgelagert ist. Das Filterbauteil 3 umfasst einen Filterrahmen 5 und eine Filtermatrix 6 mit, hier ebenfalls neun, Lichtwellenlängenfiltern 7a-c, von denen jeweils drei identisch sind, nämlich jeweils drei dieselbe Lichtwellenlänge hindurchlassen. Die Filtermatrix 6 ist als schachbrettartiges modifiziertes Bayerfilter ausgeführt. Lichtwellenlängenfilter 7a-c, die jeweils andere Lichtwellenlängen hindurchlassen, sind einander benachbart angeordnet.

Die Photodetektoren 4 sind Einzelphotonen-Lawinenphotodioden und alle identisch ausgeführt, sie können also nur einzelne Photonen zählen, unabhängig von deren Lichtwellenlänge. Die Zugehörigkeit der Photodetektoren 4 zu einer jeweiligen Photodetektoranordnung ergibt sich nur daraus, für welchen Lichtwellenlängenbereich das Lichtwellenlängenfilter 7a-c der Filtermatrix 6, das dem jeweiligen Photodetektor 4 vorgelagert ist, durchlässig ist.

Das Detektorbauteil 2 umfasst somit im gezeigten Ausführungsbeispiel eine gemeinsame 3x3-Detektormatrix 8 mit neun identischen einzelnen Photodetektoren 4. Das Filterbauteil 3 umfasst die 3x3-Filtermatrix 6 mit drei Rotfiltern 7a, die nur Rotlicht als einen ersten Lichtwellenlängenbereich hindurchlassen, drei Grünfiltern 7b, die nur Grünlicht als einen zweiten Lichtwellenlängenbereich hindurchlassen, und drei Blaufiltern 7c, die nur Blaulicht als einen dritten Lichtwellenlängenbereich hindurchlassen. Somit sind der erste Lichtwellenlängenbereich, der zweite Lichtwellenlängenbereich und der dritte Lichtwellenlängenbereich voneinander verschieden.

Die Photodetektoren 4, die hinter den drei Rotfiltern 7a angeordnet sind, bilden die erste Photodetektoranordnung, wobei die erste Photodetektoranordnung durch die vorgelagerten Rotfilter 7a dafür eingerichtet ist, den ersten Lichtwellenlängenbereich, nämlich den von Rotlicht, zu empfangen. Die drei Rotfilter 7a definieren also die erste Photodetektoranordnung, die hier aus drei identischen Einzelphotonen-Lawinenphotodioden besteht.

Die Photodetektoren 4, die hinter den drei Grünfiltern 7b angeordnet sind, bilden die zweite Photodetektoranordnung, wobei die zweite Photodetektoranordnung durch die vorgelagerten Grünfilter 7b dafür eingerichtet ist, den zweiten Lichtwellenlängenbereich, nämlich den von Grünlicht, zu empfangen. Die drei Grünfilter 7b definieren also die zweite Photodetektoranordnung, die hier aus drei weiteren identischen Einzelphotonen-Lawinenphotodioden besteht.

Die Photodetektoren 4, die hinter den drei Blaufiltern 7c angeordnet sind, bilden die dritte Photodetektoranordnung, wobei die dritte Photodetektoranordnung durch die vorgelagerten Blaufilter 7c dafür eingerichtet ist, den dritten Lichtwellenlängenbereich, nämlich den von Blaulicht, zu empfangen. Die drei Blaufilter 7c definieren also die dritte Photodetektoranordnung, die hier aus drei weiteren identischen Einzelphotonen-Lawinenphotodioden besteht.

Jeder der neun Photodetektoren 4 ist somit offensichtlich genau einer der Photodetektoranordnungen zugeordnet, wobei jedem der Photodetektoren 4 ein Lichtwellenlängenfilter 7a-c vorgelagert ist, das für den Lichtwellenlängenbereich, nämlich Rotlicht, Grünlicht oder Blaulicht, durchlässig ist, der durch die jeweilige Photodetektoranordnung empfangen werden soll. Das bedeutet, dass eine Gestaltung der Filtermatrix 6 einer Gestaltung der Detektormatrix 8 entspricht, sodass jeweils einer der Lichtwellenlängenfilter 7a-c einem der Photodetektoren 4 vorgelagert ist.

Mit anderen Worten zeigt Figur 1 eine erste erfindungsgemäße Konfiguration, die für die Detektormatrix 8 eine SiPM-Konstellation aus mehreren, zusammengeschalteten SPAD-Dioden als Photodetektoren 4 vorsieht, hier beispielsweise als 3x3 Makropixel. Vor dieser Detektormatrix ist die Filtermatrix 6 im optischen Empfangspfad des LiDAR-Systems 1 eingesetzt, sodass jede SPAD nur Photonen einer ausgewählten Lichtwellenlänge, bestimmt durch das jeweils vorgelagerte Lichtwellenlängenfilter 7a-c, zählen kann. In nicht gezeigten Ausführungsformen kann das Rotfilter 7a auch als kombiniertes Rot- und Infrarotfilter ausgeführt sein, das nur Rotlicht und Infrarotlicht hindurchlässt.

Figur 2 zeigt nun eine Draufsicht auf das Detektorbauteil 2. Das Detektorbauteil 2 umfasst die 3x3-Detektormatrix 8, die aus den neun identischen Photodetektoren besteht, und eine Trägerplatte 9, die die Detektormatrix 8 trägt. Ohne Kenntnis der Filtermatrix 6 ist also nicht erkennbar, welcher der neun identischen Photodetektoren 4 zu welcher Photodetektoranordnung zugeordnet ist. Mit anderen Worten bedeutet dies, dass durch einen Austausch der Filtermatrix 6 auch die Zuordnung der Photodetektoren 4 geändert werden kann.

Jeder Photodetektor 4 ist über eine elektronische Leiterbahnanordnung 10 mit einer Auswertelektronik 11, beispielsweise gebildet durch einen integrierten Auswertesteuerungsschaltkreis, verbunden. Die Auswerteelektronik 11 ist dafür eingerichtet, aus Empfangssignalen der Photodetektoren 4 ein Farbsignal zu bilden, um die Farbinformationen über die Umwelt zu erfassen. Die Auswerteelektronik 11 kennt aus einer eingespeicherten Zuordnungstabelle die Zuordnung der einzelnen Photodetektoren 4 der Detektormatrix 8 zu den, hier drei, verschiedenen Photodetektoranordnungen und kann so zum Beispiel ein Zählsignal eines Photodetektors 4, dem ein Rotfilter 7a vorgelagert ist, als Empfangssignal aus der ersten Photodetektoranordnung und somit als Rotsignal werten. Die Auswerteelektronik 11 ist im ersten Ausführungsbeispiel dafür eingerichtet, die Empfangssignale aller Photodetektoren 4 zusammenzuführen und als gemeinsames RGB-Farbsignal auszugeben. Gleichzeitig ist die Auswerteelektronik 11 dafür eingerichtet, aus den Empfangssignalen der Photodetektoren 4 die Tiefeninformationen über die Umwelt zu erhalten. Jedem Photodetektor 4 kommt somit eine doppelte Funktion zu.

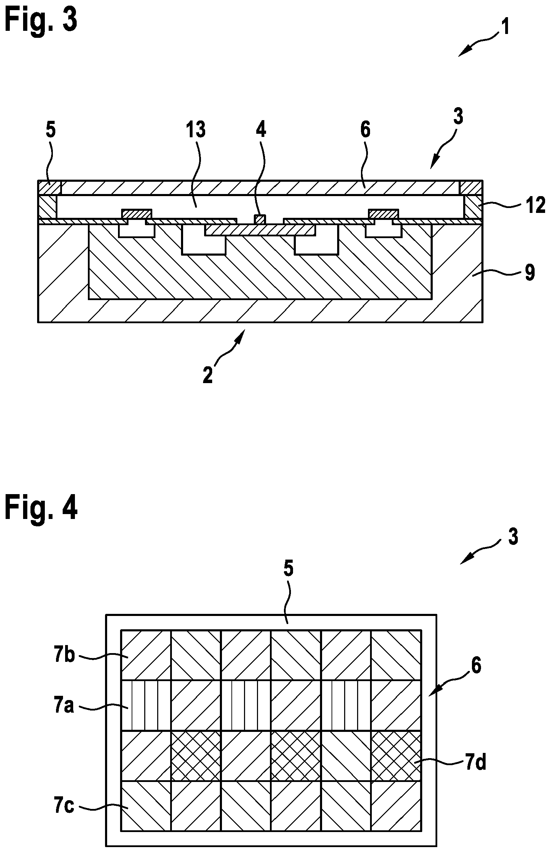

Figur 3 zeigt eine seitliche Querschnittsansicht durch das Detektorbauteil 2 und das Filterbauteil 3. Das Filterbauteil 3, das die Filtermatrix 6 aufweist, ist mit dem Detektorbauteil 2, das die Detektormatrix 8 aufweist, stoffschlüssig verbunden. Zu diesem Zweck ist das Filterbauteil 3 mit dem Detektorbauteil 2 an einer Verbindungsstelle 12 in einem Randbereich verklebt. So sind Detektorbauteil 2 und Filterbauteil 3 permanent miteinander verbunden. Das Detektorbauteil 2 und das Filterbauteil 3 bilden also ein gemeinsames Bauelement. Die Photodetektoren 4 sind in einem Innenraum 13, der zwischen Detektorbauteil 2 und Filterbauteil 3 gebildet ist, verkapselt. So sind die einzelnen Photodetektoren 4 vor äußeren Umwelteinflüssen, wie zum Beispiel Feuchtigkeit, geschützt. Im gezeigten Ausführungsbeispiel ist jeweils ein Photodetektor 4 einzeln im Innenraum 13 verkapselt. In anderen Ausführungsbeispielen sind aber zwei oder mehr Photodetektoren 4 im Innenraum 13 gemeinsam verkapselt. Mit anderen Worten zeigt Figur 3 eine Durchschnittsabbildung einer einzelnen SPAD, also Photodetektor 4, zur Darstellung der nahtlosen Anbindung einer Filtermatrix 6 an die Halbleiterdiode, den Photodetektor 4, in einem Reinraumprozess, zum Beispiel mithilfe stoffschlüssiger Klebeverbindungen. So wird ein verkapseltes gemeinsames Bauelement aus Detektorbauteil 2 und Filterbauteil 3 geschaffen.

Figur 4 zeigt eine Draufsicht auf eine alternative Filtermatrix 6 gemäß einer zweiten Ausführungsform der Erfindung. Die Filtermatrix 6 ist wieder als Bayerfilter ausgeführt. Im Unterschied zur ersten Ausführungsform ist die Filtermatrix 6, die wieder in dem Filterrahmen 5 angeordnet ist, eine 4x5-Filtermatrix 6 mit vier Zeilen und fünf Spalten, also zwanzig Lichtwellenlängenfiltern 7a-d. Nicht gezeigt ist, dass die Detektormatrix 8 in der zweiten Ausführungsform des LiDAR-Systems 1 entsprechend zwanzig identische Detektoren 4 in einer 4x5-Detektormatrix 8 aufweist, sodass die Gestaltung der Filtermatrix 6 wieder der Gestaltung der Detektormatrix 8 entspricht und jeweils ein Lichtwellenlängenfilter 7a-d der Filtermatrix 6 einem Photodetektor 4 der Detektormatrix 8, in Empfangsrichtung, vorgelagert ist. Hier sind nicht nur drei, sondern vier unterschiedliche Lichtwellenlängenfilter 7a-d bereitgestellt, von denen jedes einen Lichtwellenlängenbereich hindurchlässt.

Das LiDAR-System 1 mit der alternativen Filtermatrix 6 aus Figur 4 umfasst dadurch eine zusätzliche, vierte Photodetektoranordnung, die dafür eingerichtet ist, einen vierten Lichtwellenlängenbereich zu empfangen, nämlich Infrarotlicht. Das vierte Lichtwellenlängenfilter 7d ist nämlich ein Infrarotfilter, das nur Infrarotlicht hindurchlässt. Deshalb ist der vierte Lichtwellenlängenbereich von den ersten, zweiten und dritten Lichtwellenlängenbereichen verschieden, die in diesem Ausführungsbeispiel wieder Rotlicht, Grünlicht und Blaulicht sind. Die Photodetektoren 4, die hinter den drei Infrarotfiltern 7d angeordnet sind, bilden die vierte Photodetektoranordnung, wobei die vierte Photodetektoranordnung, durch die vorgelagerten Infrarotfilter 7d, dafür eingerichtet ist, den vierten Lichtwellenlängenbereich, nämlich den von Infrarotlicht, zu empfangen. Die drei Infrarotfilter 7d definieren also die vierte Photodetektoranordnung, die somit hier aus drei der identischen Einzelphotonen-Lawinenphotodioden besteht. Die Anzahl an Photodetektoren 4 in der vierten Photodetektoranordnung ist, wie aus Figur 4 hervorgeht, geringer als die Anzahl an Photodetektoren 4 in jeder der drei anderen Photodetektoranordnungen im zweiten Ausführungsbeispiel. In Figur 4 sind veranschaulichend jeweils ein Rotfilter 7a, ein Grünfilter 7b, ein Blaufilter 7c und ein Infrarotfilter 7d mit Bezugszeichen gekennzeichnet. Die jeweilige Schraffur weist auf jeweils weitere Lichtwellenlängenfilter 7a-d mit jeweils Durchlässigkeit für gleiche Lichtwellenlängen hin, die jedoch aus Gründen der Übersichtlichkeit kein Bezugszeichen tragen.

Auf diese Weise werden ein LiDAR-System 1 und ein Kraftfahrzeug bereitgestellt, das mit dem LiDAR-System 1 wirkverbunden ist, wobei das LiDAR-System 1 dafür eingerichtet ist, eine Umwelt mit einem Lichtstrahl abzutasten, um Tiefeninformationen über die Umwelt zu erfassen, wobei das LiDAR-System 1 zusätzlich dafür eingerichtet ist, Farbinformationen über die Umwelt zu erfassen. In der gezeigten Lösung werden Photodetektoren 4 jeweils ein Lichtwellenlängenfilter 7a-d vorgelagert, sodass die Photodetektoren 4 dafür eingerichtet sind, nicht nur Photonen zu zählen, sondern auch selektiv Farbinformationen zu empfangen. Die Auswertelektronik 11 kann dann sowohl die Farbinformationen als auch die Tiefeninformationen auswerten und beispielsweise ein RGB-Signal oder ein RGBIR-Signal, das durch die Photodetektoren 4 gewonnen wird, ausgeben. Das LiDAR-System 1 stellt somit mit anderen Worten gleichzeitig sowohl eine herkömmliche LiDAR-Abtastfunktion, zur Erfassung von Tiefeninformationen, als auch eine passive Farbbildkamera, zur Erfassung von Farbinformationen, bereit.

## Patentansprüche

1. LiDAR-System (1), das dafür eingerichtet ist, eine Umwelt mit einem Lichtstrahl abzutasten, um Tiefeninformationen über die Umwelt zu erfassen, wobei, das LiDAR-System (1) zusätzlich dafür eingerichtet ist, Farbinformationen über die Umwelt zu erfassen, wobei das LiDAR-System (1) dafür eingerichtet ist, aus Empfangssignalen von einem oder mehreren Photodetektoren (4) ein Farbsignal zu bilden, um die Farbinformationen über die Umwelt zu erfassen.
wobei das LiDAR-System (1) eine erste Photodetektoranordnung und eine zweite Photodetektoranordnung aufweist, wobei die erste Photodetektoranordnung dafür eingerichtet ist, einen ersten Lichtwellenlängenbereich zu empfangen, und die zweite Photodetektoranordnung dafür eingerichtet ist, einen zweiten Lichtwellenlängenbereich zu empfangen, wobei der erste Lichtwellenlängenbereich von dem zweiten Lichtwellenlängenbereich mindestens teilweise verschieden ist, wobei jeder der Photodetektoren (4) genau einer der Photodetektoranordnungen zugeordnet ist und jedem Photodetektor (4) ein Lichtwellenlängenfilter (7a-d) vorgelagert ist, das für den Lichtwellenlängenbereich durchlässig ist, der durch die jeweilige Photodetektoranordnung empfangen werden soll,
wobei zwei oder mehr der Photodetektoranordnungen in einer gemeinsamen Detektormatrix (8) angeordnet sind und ein gemeinsames Detektorbauteil (2) bilden,
**dadurch gekennzeichnet, dass**
mehrere der Lichtwellenlängenfilter (7a-d) in einer gemeinsamen Filtermatrix (6) angeordnet sind und ein gemeinsames Filterbauteil (3) bilden, wobei eine Gestaltung der Filtermatrix (6) einer Gestaltung der Detektormatrix (8) entspricht, sodass jeweils ein Lichtwellenlängenfilter (7a-d) einem Photodetektor (4) vorgelagert ist, und
das Filterbauteil (3) mit dem Detektorbauteil (2) stoffschlüssig verbunden ist, so dass die Photodetektoren (4) in einem zwischen Filterbauteil (3) und Detektorbauteil (2) gebildeten Innenraum (13) verkapselt sind.

2. LiDAR-System (1) nach Anspruch 1, wobei das LiDAR-System (1) eine dritte Photodetektoranordnung aufweist, wobei die dritte Photodetektoranordnung dafür eingerichtet ist, einen dritten Lichtwellenlängenbereich zu empfangen, wobei der dritte Lichtwellenlängenbereich von dem ersten Lichtwellenlängenbereich mindestens teilweise verschieden ist und von dem zweiten Lichtwellenlängenbereich mindestens teilweise verschieden ist.

3. LiDAR-System (1) nach Anspruch 24, wobei das LiDAR-System (1) eine vierte Photodetektoranordnung aufweist, wobei die vierte Photodetektoranordnung dafür eingerichtet ist, einen vierten Lichtwellenlängenbereich zu empfangen, wobei der vierte Lichtwellenlängenbereich von dem ersten Lichtwellenlängenbereich mindestens teilweise verschieden ist und von dem zweiten Lichtwellenlängenbereich mindestens teilweise verschieden ist und von dem dritten Lichtwellenlängenbereich mindestens teilweise verschieden ist.

4. LiDAR-System (1) einem der vorstehenden Ansprüche wobei mindestens einer der Photodetektoren (4) eine Einzelphotonen-Lawinenphotodiode ist, aus deren Empfangssignal sowohl die Tiefeninformationen als auch die Farbinformationen erhalten werden.

5. Kraftfahrzeug mit einem LiDAR-System (1) nach einem der Ansprüche 1 bis 94, wobei das LiDAR-System (1) mit dem Kraftfahrzeug wirkverbunden ist.

## Claims

1. LiDAR system (1) configured to scan an environment with a light beam in order to acquire depth information about the environment, wherein the LiDAR system (1) is additionally configured to acquire colour information about the environment,
wherein the LiDAR system (1) is configured to form a colour signal from reception signals of one or more photodetectors (4) in order to acquire the colour information about the environment,
wherein the LiDAR system (1) comprises a first photodetector assembly and a second photodetector assembly, wherein the first photodetector assembly is configured to receive a first light wavelength range, and the second photodetector assembly is configured to receive a second light wavelength range, wherein the first light wavelength range is at least partly different from the second light wavelength range, wherein each of the photodetectors (4) is assigned to exactly one of the photodetector assemblies, and disposed upstream of each photodetector (4) there is a light wavelength filter (7a-d) which is transmissive to the light wavelength range which is intended to be received by the respective photodetector assembly,
wherein two or more of the photodetector assemblies are arranged in a common detector matrix (8) and form a common detector component (2), **characterized in that**
a plurality of the light wavelength filters (7a-d) are arranged in a common filter matrix (6) and form a common filter component (3), wherein a configuration of the filter matrix (6) corresponds to a configuration of the detector matrix (8), such that one light wavelength filter (7a-d) is respectively disposed upstream of one photodetector (4), and
the filter component (3) is integrally bonded to the detector component (2), such that the photodetectors (4) are encapsulated in an interior space (13) formed between filter component (3) and detector component (2).

2. LiDAR system (1) according to Claim 1, wherein the LiDAR system (1) comprises a third photodetector assembly, wherein the third photodetector assembly is configured to receive a third light wavelength range, wherein the third light wavelength range is at least partly different from the first light wavelength range and is at least partly different from the second light wavelength range.

3. LiDAR system (1) according to Claim 2, wherein the LiDAR system (1) comprises a fourth photodetector assembly, wherein the fourth photodetector assembly is configured to receive a fourth light wavelength range, wherein the fourth light wavelength range is at least partly different from the first light wavelength range and is at least partly different from the second light wavelength range and is at least partly different from the third light wavelength range.

4. LiDAR system (1) any of the preceding claims, wherein at least one of the photodetectors (4) is a single-photon avalanche photodiode, from the reception signal of which both the depth information and the colour information are obtained.

5. Motor vehicle comprising a LiDAR system (1) according to any of Claims 1 to 4, wherein the LiDAR system (1) is operatively connected to the motor vehicle.

## Revendications

1. Système LiDAR (1) conçu pour balayer un environnement au moyen d'un faisceau lumineux afin de détecter des informations de profondeur relatives à l'environnement, le système LiDAR (1) étant en outre conçu pour détecter des informations de couleur relatives à l'environnement,
le système LiDAR (1) étant conçu pour générer un signal de couleur à partir des signaux de réception provenant d'un ou plusieurs photodétecteurs (4), afin de détecter les informations de couleur relatives à l'environnement,
le système LiDAR (1) comportant un premier agencement de photodétecteurs et un deuxième agencement de photodétecteurs, le premier agencement de photodétecteurs étant conçu pour recevoir une première plage de longueurs d'onde de lumière, et le deuxième agencement de photodétecteurs étant conçu pour recevoir une deuxième plage de longueurs d'onde de lumière, la première plage de longueurs d'onde de lumière étant au moins partiellement différente de la deuxième plage de longueurs d'onde de lumière, chacun des photodétecteurs (4) étant associé à exactement un des agencements de photodétecteurs et chaque photodétecteur (4) étant précédé d'un filtre de longueurs d'onde de lumière (7a-d) qui est transparent vis-à-vis de la plage de longueurs d'onde de lumière devant être reçue par l'agencement de photodétecteurs respectif,
deux des agencements de photodétecteurs ou plus étant disposés dans une matrice de détection commune (8) et formant un composant de détection commun (2),
**caractérisé en ce que**
plusieurs des filtres de longueurs d'onde de lumière (7a-d) étant disposés dans une matrice de filtres commune (6) et formant un composant de filtre commun (3), une configuration de la matrice de filtres (6) correspondant à une configuration de la matrice de détecteurs (8), de sorte qu'un photodétecteur (4) est respectivement précédé d'un filtre de longueurs d'onde de lumière (7ad), et
le composant de filtre (3) est relié par complémentarité de matériau au composant de détecteur (2), de sorte que les photodétecteurs (4) sont encapsulés dans un espace intérieur (13) formé entre le composant de filtre (3) et le composant de détecteur (2).

2. Système LiDAR (1) selon la revendication 1, dans lequel le système LiDAR (1) comporte un troisième agencement de photodétecteurs, le troisième agencement de photodétecteurs étant conçu pour recevoir une troisième plage de longueurs d'onde de lumière, la troisième plage de longueurs d'onde de lumière étant au moins partiellement différente de la première plage de longueurs d'onde de lumière et étant au moins partiellement différente de la deuxième plage de longueurs d'onde de lumière.

3. Système LiDAR (1) selon la revendication 2, dans lequel le système LiDAR (1) comporte un quatrième agencement de photodétecteurs, le quatrième agencement de photodétecteurs étant conçu pour recevoir une quatrième plage de longueurs d'onde de lumière, la quatrième plage de longueurs d'onde de lumière étant au moins partiellement différente de la première plage de longueurs d'onde de lumière et étant au moins partiellement différente de la deuxième plage de longueurs d'onde de lumière et étant au moins partiellement différente de la troisième plage de longueurs d'onde de lumière.

4. Système LiDAR (1) selon l'une des revendications précédentes, dans lequel au moins l'un des photodétecteurs (4) est une photodiode à avalanche à photons uniques, dont le signal de réception permet d'obtenir à la fois les informations de profondeur et les informations de couleur.

5. Véhicule à moteur équipé d'un système LiDAR (1) selon l'une des revendications 1 à 4, le système LiDAR (1) étant fonctionnellement relié au véhicule à moteur.
